# EUROPEAN PATENT APPLICATION

(11) **EP 4 755 739 A1**
(43) Date of publication of application: **10.06.2026**
(21) Application number: 25210416.1
(22) Date of filing: 22.10.2025
(51) Int. Cl.: B60T 17/04

(54) **GLADHAND LOCKOUT SYSTEM AND METHOD**

(30) Priority: 03.12.2024 US 202418967010
(71) Applicant: Brady Worldwide, Inc., Milwaukee, Wisconsin 53223 (US)
(72) Inventor: ENGER, Andrew, Muskego, WI, 53150 (US); GLADKOV, Gene, Muskego, WI, 53150 (US)
(74) Representative: Viering, Jentschura & Partner mbB Patent- und Rechtsanwälte

(57) **Abstract**

The present disclosure is directed to a lockout for use with a gladhand connector. The lockout includes a body defined by a lockout first end and a lockout second end. The body includes a grip portion, a lockout compartment positioned proximate to the lockout first end, a lockout protruding member positioned proximate to the lockout second end, and an opening configured to receive at least a portion a locking member. The lockout further includes a mounting post positioned on the body and located between the lockout compartment and the lockout protruding member.

## Description

### FIELD OF INVENTION

This disclosure relates to a coupling device for a vehicle, and more particularly to a gladhand lockout system and method.

### BACKGROUND

A gladhand is a type of coupling device used to connect the air brake lines between the tractor and trailer of a vehicle (e.g., a semi-truck). For example, the gladhand may be connected to the braking system of the tractor and may be installable on a gladhand connector positioned on the trailer. The air brakes of the trailer are in a braking state when the gladhand is removed from the gladhand connector and become activated when the gladhand is connected to the gladhand connector. Gladhands typically include a seal designed to prevent air from escaping the system and to prevent dirt and moisture from entering the system. Thus, the gladhand ensures that the air brake system functions properly by allowing air to flow between the tractor and the trailer.

A gladhand lockout is a device that secures the gladhand connector to prevent unauthorized or unintentional connection or disconnection of the air brake lines. In this way, gladhand lockouts serve as an important safety and security device. For example, a gladhand lockout can prevent thieves from connecting to and stealing a vacant trailer. Additionally, gladhand lockouts can prevent potentially hazardous accidents by "dead-lining" a trailer (e.g., preventing the trailer from moving) while being loaded or unloaded.

Gladhand lockouts are typically provided in the form of a metal or heavy-duty plastic cover designed to fit over the gladhand connector. The gladhand lockout normally includes a locking mechanism to secure the gladhand lockout in place and prevent it from being unintentionally ejected or removed from the gladhand connector. However, gladhand lockouts are typically designed for use with a particular gladhand connector or with a narrow subset of gladhand connectors. Additionally, many existing gladhand lockouts include multiple component parts that complicate assembly and application of the gladhand lockout, and many existing gladhand lockouts are bulky or difficult to fit into tight spaces or require both hands to install. Thus, in view of at least the issues outlined above, a need exists for a gladhand lockout device that is widely compatible with a variety of gladhands and convenient to manufacture and apply.

### SUMMARY

The present systems and methods disclosed herein overcome many of the shortcomings and limitations of the prior art devices discussed above.

In one aspect, a lockout for use with a gladhand connector is disclosed. The lockout includes a body defined by a lockout first end and a lockout second end. The body includes a grip portion, a lockout compartment positioned proximate to the lockout first end, a lockout protruding member positioned proximate to the lockout second end, and an opening configured to receive at least a portion of a locking member. The lockout further includes a mounting post positioned on the body and located between the lockout compartment and the lockout protruding member.

In some instances, the body of the lockout has substantially the same shape as the body of the gladhand connector.

In some instances, the lockout compartment includes a lockout sidewall and a lockout end wall, and the lockout sidewall and the lockout end wall at least partially define a lockout cavity configured to receive a portion of the gladhand connector.

In some instances, the lockout end wall is configured to engage a portion of the gladhand connector to inhibit rotation of the lockout with respect to the gladhand connector when the lockout is in use.

In some instances, the opening is positioned on the lockout sidewall and extends entirely therethrough.

In some instances, the mounting post is configured to be received within a seal opening of a seal member positioned on the gladhand connector.

In some instances, the mounting post includes a cylindrical portion coupled to the body and a frustoconical portion coupled to the cylindrical portion, the frustoconical portion is imparted with a tapered geometry, and the cylindrical portion is imparted with a diameter that is slightly oversized with respect to the seal opening such that the mounting post applies an outward force that compresses the seal member when the mounting post is received within the seal opening.

In other instances, the lockout is configured to be installed on the gladhand connector by positioning the lockout adjacent to the gladhand connector in an initial position where the lockout is oriented at an angle with respect to the gladhand connector and the mounting post is received within the seal opening, rotating the lockout into a locking position where the lockout is substantially parallel with respect to the gladhand connector, and coupling the locking member to the lockout.

In some instances, the lockout protruding member includes a lockout planar portion and a lockout lipped portion.

In some instances, the lockout protruding member is configured to be received within a connector cavity of the gladhand connector, and the connector cavity is at least partially defined by a connector end wall configured to engage the lockout protruding member to inhibit rotation of the lockout with respect to the gladhand connector when the lockout is in use.

In some instances, the locking member is a padlock.

In another aspect, a gladhand lockout device is disclosed. The gladhand lockout device includes a gladhand connector defined by a connector first end and a connector second end, a lockout removably installable on the gladhand connector, and a locking member configured to secure the lockout in a substantially fixed position with respect to the gladhand connector. The gladhand connector includes a mounting face with an opening. The lockout is defined by a lockout first end and a lockout second end and includes a mounting post configured to be received within the opening when the gladhand lockout device is in use.

In some instances, the lockout further includes a lockout cavity positioned proximate to the lockout first end and a lockout protruding member positioned proximate to the lockout second end.

In some instances, the gladhand connector further includes a connector cavity positioned proximate to the connector first end and a connector protruding member positioned proximate to the connector second end.

In some instances, the lockout cavity is configured to receive the connector protruding member and the connector cavity is configured to receive the lockout protruding member when the gladhand lockout device is in use.

In some instances, the lockout cavity is at least partially enclosed by a lockout compartment comprising a lockout sidewall and a lockout end wall.

In some instances, the mounting face includes a housing and a seal member positioned within the housing, and the opening is provided in the form of a circular opening extending at least partially through the seal member.

In a further aspect, a method of securing an airbrake system of a vehicle is disclosed. The method includes providing a lockout including a lockout protruding member, a mounting post, a lockout cavity, and a locking hole. The method further includes positioning the lockout adjacent to a gladhand connector in an initial position where the lockout is oriented at an angle with respect to the gladhand connector. The gladhand connector includes a connector protruding member, a seal member, and a connector cavity. The method further includes positioning the lockout against the gladhand connector such that the mounting post is received within an opening of the seal member and rotating the lockout from the initial position to a locking position where the lockout protruding member is positioned within the connector cavity and the connector protruding member is positioned within the lockout cavity.

In some instances, the method further comprises the step of installing a locking member on the lockout via the locking hole.

In some instances, the lockout is maintained in the locking position by at least one of engagement between the lockout protruding member and a barrier that at least partially defines the connector cavity, engagement between the connector protruding member and a lockout end wall that at least partially defines the lockout cavity, and engagement between the connector protruding member and at least a portion of the locking member.

### BRIEF DESCRIPTION OF THE FIGURES

FIG. 1 illustrates a left side elevational view of an exemplary vehicle;
FIG. 2 illustrates an enlarged, isometric view of a connection assembly of the vehicle of FIG. 1;
FIG. 3 illustrates a front, top, and right side isometric view of an exemplary gladhand lockout device including a gladhand connector, a lockout, and a locking member;
FIG. 4 illustrates a front, top, and left side isometric view of the lockout of FIG. 3;
FIG. 5 illustrates a left side elevational view of the lockout of FIG. 4;
FIG. 6 illustrates a rear, top, and left side isometric view of the lockout of FIG. 4;
FIG. 7 illustrates a front, top, and left side isometric view of the gladhand connector of FIG. 3;

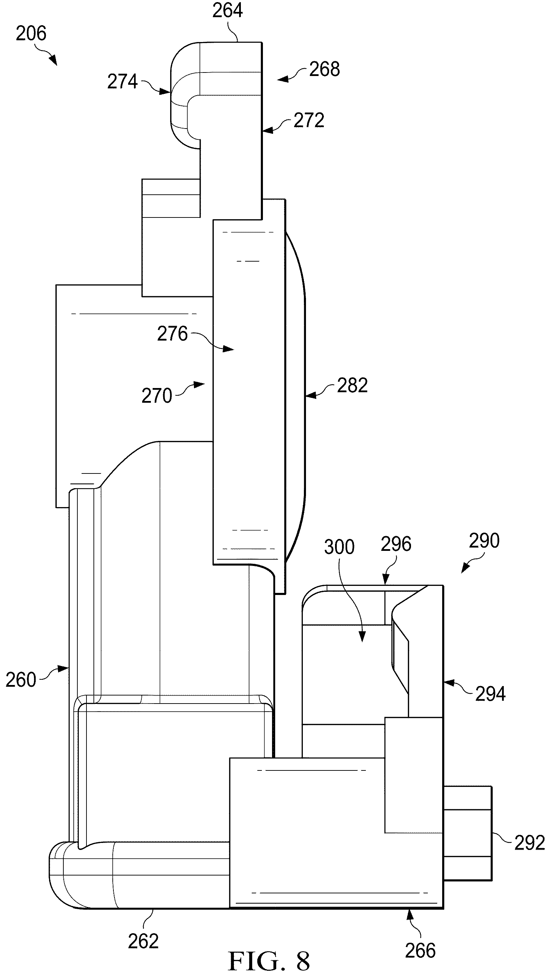

FIG. 8 illustrates a left side elevational view of the gladhand connector of FIG. 7;
FIG. 9 illustrates another front, top, and left side isometric view of the gladhand connector of FIG. 7;
FIG. 10 illustrates a bottom plan view of the gladhand connector of FIG. 7;
FIG. 11 illustrates a front, top, and right side isometric view of the gladhand connector of FIG. 7 with the lockout of FIG. 4 positioned adjacent to the gladhand connector in an initial position;
FIG. 12 illustrates a front, top, and right side isometric view of the gladhand connector of FIG. 7 with the lockout of FIG. 4 positioned adjacent to the gladhand connector in a locking position;
FIG. 13 illustrates a rear view of the gladhand lockout device of FIG. 3;
FIG. 14 illustrates an enlarged, bottom view of a portion of the gladhand connector of FIG. 7 with the lockout of FIG. 4 positioned adjacent to the gladhand connector in the locking position of FIG. 12;
FIG. 15 illustrates a cross-sectional left side elevational view of the gladhand lockout device of FIG. 3 taken along the line 15-15 of FIG. 3; and
FIG. 16 is a flowchart illustrating a method of securing an air brake system of a vehicle using a gladhand lockout device according to the principles of the present disclosure.

### DETAILED DESCRIPTION

Before any aspect of the present disclosure are explained in detail, it is to be understood that the present disclosure is not limited in its application to the details of construction and the arrangement of components set forth in the following description or illustrated in the following drawings. The present disclosure is capable of other configurations and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Terms indicating relative position such as "above," "below," "upper," "lower," "rear," "front," and so forth are used for purposes of illustration only, unless otherwise noted and are made with reference to the orientation of the drawings. It should be understood that these terms are not generally meant to indicate a preferred orientation when such an orientation is not inherently or explicitly required.

The present disclosure is directed to a lockout for use with a gladhand connector. For example, the lockout can be installed on a gladhand connector to secure an airbrake system of a vehicle. The lockout may have a body with substantially the same shape as a body of the gladhand connector. The lockout may include a mounting post coupled to the body, and the gladhand connector may include a seal member including a seal opening that receives the mounting post when the lockout is installed. In some instances, the lockout may be installed by positioning the lockout adjacent to the gladhand connector in an initial position and subsequently rotating the lockout into a locking position. In the initial position, the lockout may be oriented at an angle with respect to the gladhand connector and the mounting post may be received within the seal opening. In the locking position, the lockout may be substantially parallel with respect to the gladhand connector, a protruding member of the lockout may be positioned within a cavity of the gladhand connector, and a protruding member of the gladhand connector may be positioned within a cavity of the lockout. Once the lockout is in the locking position, a locking member may be coupled to the lockout to prevent or inhibit the lockout from rotating out of the locking position.

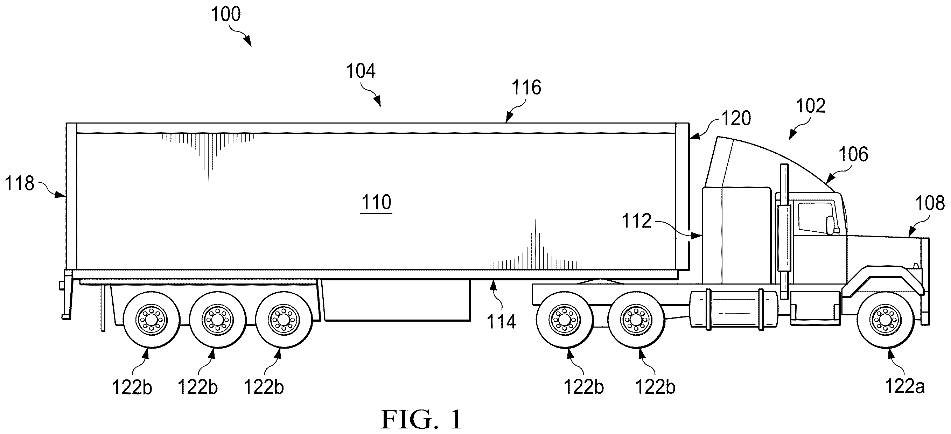

FIG. 1 depicts an exemplary vehicle 100 may include a tractor 102 detachably connected to a trailer 104. The tractor 102 may include a cab 106, within which a driver may operate the vehicle 100, as well as an engine bay 108 that houses the engine and/or other components involved in operation of the vehicle 100. The trailer 104 may include a compartment 110 for holding cargo to be transported by the vehicle 100. The tractor 102 may include a rear wall 112 positioned proximate to the trailer 104. The compartment 110 of the trailer 104 may be defined by a trailer base 114, a ceiling 116 positioned opposite the trailer base 114, a door wall 118 (e.g., configured to open and provide access to an interior of the compartment 110), and a front wall 120 positioned opposite the door wall 118. The rear wall 112 of the tractor 102 may be positioned adjacent or proximate to the front wall 120 of the trailer 104 when the vehicle 100 is in use.

The tractor 102 and the trailer 104 may each include one or more sets of wheels 122. For example, the tractor 102 may include a set of first wheels 122a and the trailer 104 may include a set of second wheels 122b. The tractor 102 may include an air brake system (not shown) operably connected to the first wheels 122a and configured to supply compressed air to the brakes thereof, thereby slowing the movement of the vehicle 100. The air brake system of the tractor 102 may be selectively connected with the trailer 104 such that the air brake system is also configured to supply compressed air to the second wheels 122b.

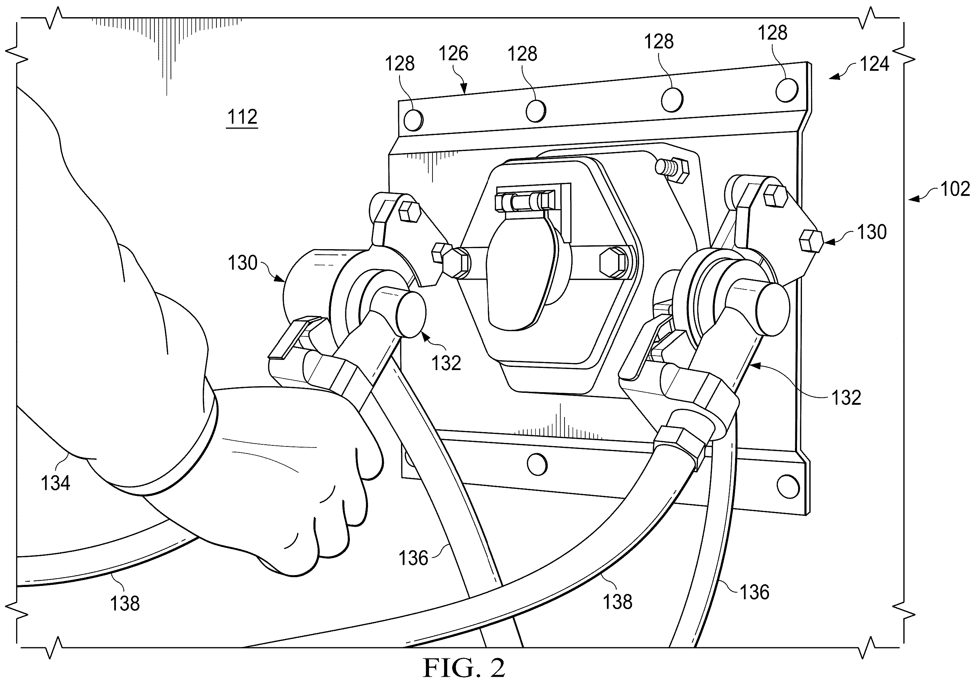

Turning to FIG. 2, the vehicle 100 may include a connection assembly 124 configured to facilitate coupling between the air brake system of the tractor 102 and the second wheels 122b such that the air brake system can supply compressed air to the second wheels 122b of the trailer 104 as well as the first wheels 122a of the tractor 102. In some instances, the connection assembly 124 may be positioned on the rear wall 112 of the tractor 102. However, in other instances, the connection assembly 124 may be positioned in any suitable location. For example, in some instances, the vehicle 100 may include a first connection assembly 124 on the rear wall 112 of the tractor 102 and a second connection assembly 124 on the front wall 120 of the trailer 104.

The connection assembly 124 may include a mounting plate 126 coupled to the rear wall 112 (e.g., bolted to the rear wall 112 using one or more fasteners 128, welded to the rear wall 112, etc.). The mounting plate 126 may support one or more gladhand connectors 130 configured to receive or be coupled with one or more gladhands 132. In some instances, the connection assembly 124 includes two gladhand connectors 130 configured to receive two gladhands 132. However, in other instances, the connection assembly 124 may include any number of gladhand connectors 130 and gladhands 132.

The gladhand 132 may be coupled to the associated gladhand connector 130 by a user 134, thereby connecting the air brake system of the tractor 102 with the second wheels 122b on the trailer 104. For example, in some instances, the gladhand connector 130 may be coupled to a fixed airline 136 (e.g., in communication with the air brake system of the tractor 102), and the gladhand 132 may be coupled to a movable airline 138 (e.g., in communication with the brakes of the second wheels 122b on the trailer 104). When the gladhand 132 is installed on or coupled to the gladhand connector 130, the fixed airline 136 may be placed in communication with the movable airline 138, thereby enabling the air brake system to function properly.

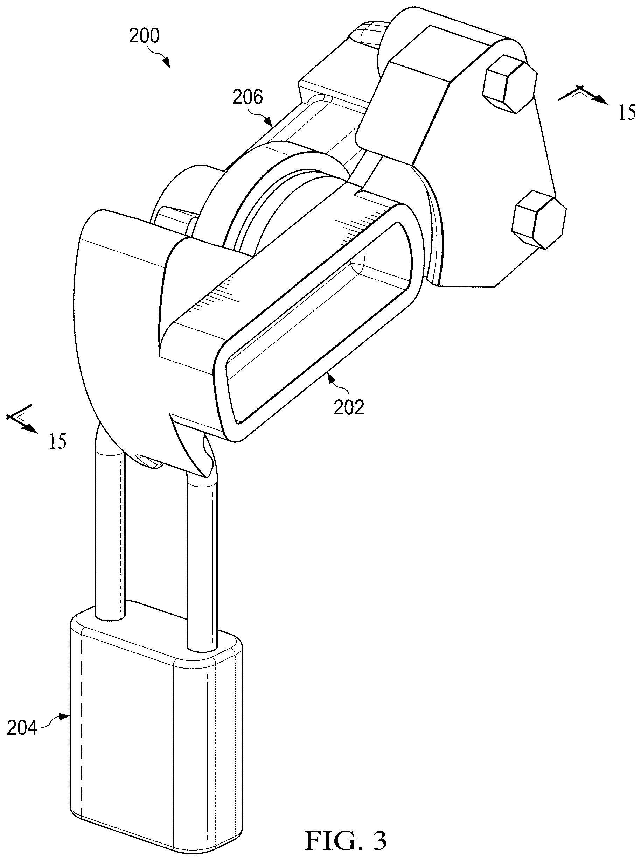

Turning to FIG. 3, an exemplary gladhand lockout device 200 may include a lockout 202 and a locking member 204. The lockout 202 may be installed on a gladhand connector 206, and the locking member 204 may then be coupled to the lockout 202 such that the lockout 202 is fixedly coupled to the gladhand connector 206. The gladhand lockout device 200 may be suitable for a wide variety of applications and may be compatible with a wide variety of gladhand connectors (e.g., the gladhand connectors 130, 206, or other gladhand connectors). For example, the gladhand lockout device 200 may be suitable for use with the connection assembly 124 of the vehicle 100 described above with reference to FIGS. 1 and 2. However, the gladhand lockout device 200 may also be suitable for use with other types of vehicles or other machinery (e.g., railroad cars, forklifts, construction machinery, industrial equipment, and the like). In some instances, the lockout 202 may be configured to mirror or mimic the shape and/or structure of a typical gladhand (e.g., the gladhand 132 or other gladhands).

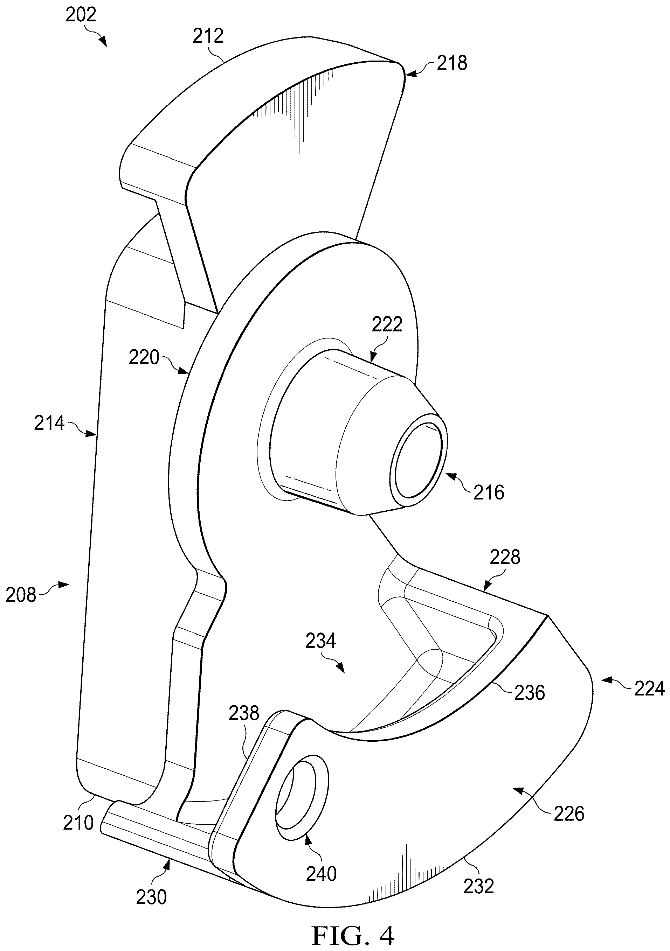

Turning to FIGS. 4-6, the lockout 202 may be provided in the form of a lockout body 208 defined by a lockout first end 210 and a lockout second end 212 opposing the lockout first end 210. In some instances, the lockout 202 may include a grip portion 214 configured to be handled or manipulated by a user, an interface portion 216 designed to facilitate coupling between the lockout 202 and the gladhand connector 206, and a lockout protruding member 218 arranged to engage a portion of the gladhand connector 206 when the gladhand lockout device 200 is assembled.

In some instances, the interface portion 216 may include a support plate 220 supporting a mounting post 222 and a lockout compartment 224. The mounting post 222 and the lockout compartment 224 may be formed integrally with the support plate 220 or may be coupled thereto. The lockout compartment 224 may be positioned at or proximate to the lockout first end 210, the lockout protruding member 218 may be positioned at or proximate to the lockout second end 212, and the mounting post 222 may be positioned between the lockout compartment 224 and the lockout protruding member 218.

In some instances, the lockout compartment 224 may include a lockout sidewall 226 oriented substantially parallel with respect to the support plate 220, an lockout end wall 228 extending between the lockout sidewall 226 and the support plate 220 (e.g., the lockout end wall 228 may be substantially perpendicular with respect to the support plate 220 and/or the lockout sidewall 226), and a lockout base 230 extending along a lower edge 232 of the lockout sidewall 226 and extending between the support plate 220 and the lockout sidewall 226. Thus, the lockout compartment 224 may define a lockout cavity 234 that is partially enclosed by the support plate 220, lockout sidewall 226, lockout end wall 228, and lockout base 230.

However, the lockout cavity 234 may be open at an upper portion of the lockout cavity 234 (i.e., between an upper edge 236 of the lockout sidewall 226 and the support plate 220) and at a portion of the lockout cavity 234 at or proximate to a lockout sidewall distal end 238 of the lockout sidewall 226 (e.g., the lockout sidewall distal end 238 being positioned opposite the lockout end wall 228). For example, the lockout cavity 234 may be configured to receive a portion of the gladhand connector 206 when the gladhand lockout device 200 is in use.

The lockout compartment 224 may include a locking hole 240 configured to receive a portion of the locking member 204, thereby securing the lockout 202 to the gladhand connector 206 when the gladhand lockout device 200 is installed. For example, in some instances, the locking hole 240 may be provided in the form of a substantially circular opening positioned proximate to the lockout sidewall distal end 238 of the lockout sidewall 226 and extending entirely through the lockout sidewall 226. However, in other instances, the locking hole 240 may be provided in any suitable form or shape and may be positioned in any suitable location on the lockout 202.

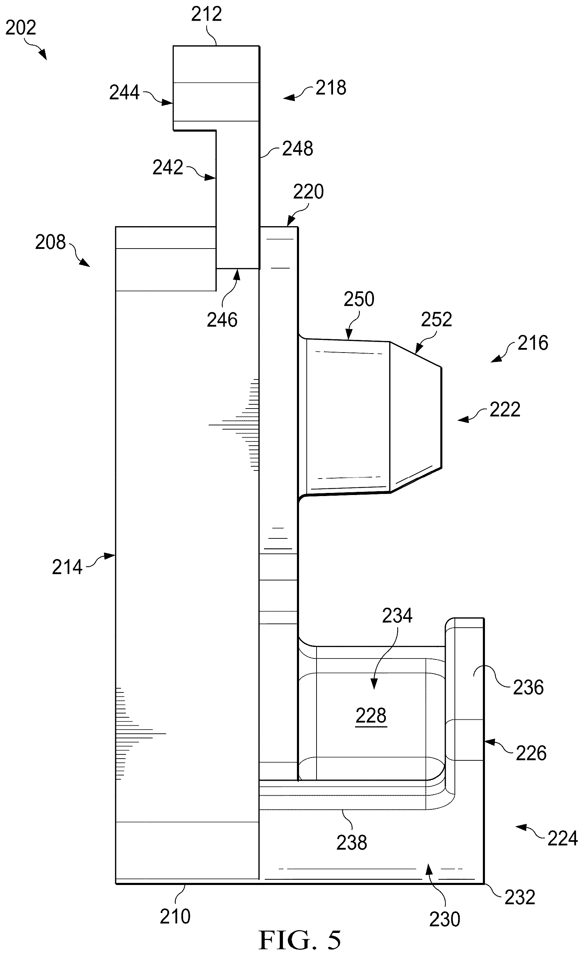

As best shown in FIG. 5, in some instances, the lockout protruding member 218 may include a lockout planar portion 242 and a lockout lipped portion 244, which may be formed integrally with one another or coupled together. The lockout planar portion 242 may be defined by a lockout planar portion proximal end 246 and a lockout planar portion distal end 248. For example, in some instances, the lockout planar portion 242 may be coupled to the grip portion 214 (e.g., positioned proximate to the lockout second end 212 and adjacent or proximate to the support plate 220) and extend upwardly therefrom, and the lockout lipped portion 244 may be positioned at the lockout planar portion distal end 248 and extend rearwardly therefrom (e.g., in the direction of the grip portion 214). In other instances, the lockout protruding member 218 may be provided in any suitable form and may be positioned in any suitable location.

Additionally, the mounting post 222 may be coupled to the support plate 220 and extend outwardly therefrom (e.g., in a direction opposite the grip portion 214). In some instances, the mounting post 222 may include a substantially cylindrical portion 250 coupled to the support plate 220 and a substantially conical or frustoconical portion 252 connected to the cylindrical portion 250 and extending outwardly therefrom, as shown in FIG. 5. The frustoconical portion 252 may have a tapered geometry such that a width or diameter of the frustoconical portion decreases from a width or diameter that is substantially equal to that of the cylindrical portion 250 to a width or diameter that is less than that of the cylindrical portion 250. In other instances, the mounting post 222 may be provided in any suitable form or shape.

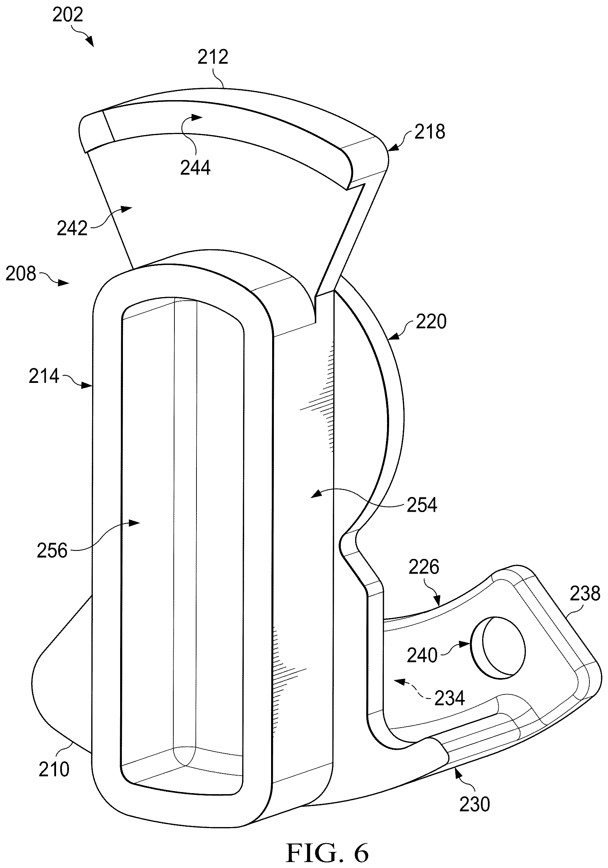

As best shown in FIG. 6, the grip portion 214 may be provided in the form of a substantially rectangular protrusion defined by a grip portion exterior surface 254. For example, a user may handle the lockout 202 by gripping the grip portion exterior surface 254 (e.g., when installing the lockout 202 on the gladhand connector 206). In some instances, the grip portion 214 may include a carveout 256 provided in the form of a portion of the grip portion 214 that has been removed or hollowed out. For example, the carveout 256 may reduce the weight of the lockout 202 and/or the cost of manufacturing the lockout 202. In other instances, the carveout 256 may be omitted.

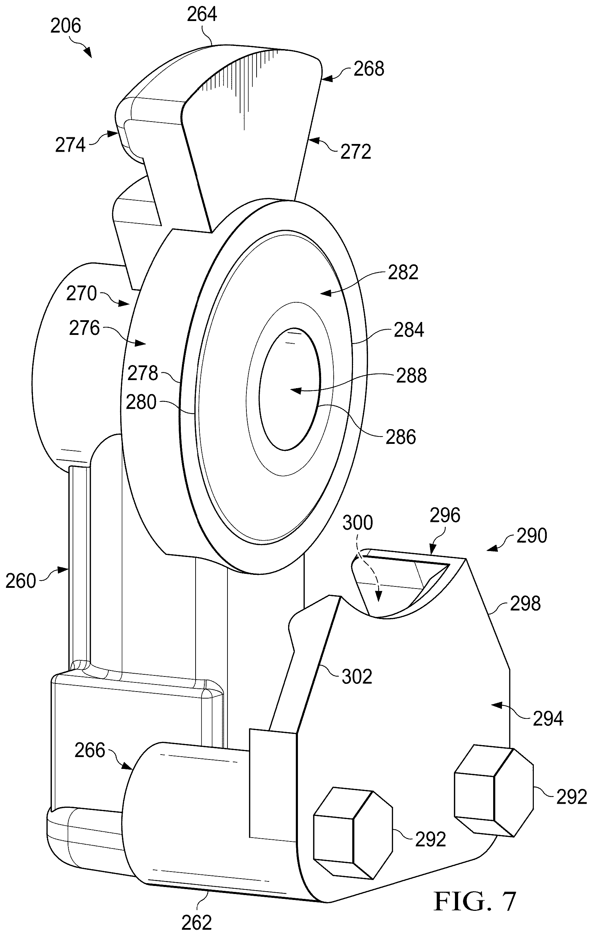

Turning to FIG. 7, the gladhand connector 206 may be provided in the form of a connector body 260 defined by a connector first end 262 and a connector second end 264 opposing the connector first end 262. The gladhand connector 206 may include a connector base 266 positioned at or proximate to the connector first end 262, a connector protruding member 268 positioned at or proximate to the connector second end 264, and a mounting face 270 positioned between the connector base 266 and the connector protruding member 268. In the example of FIG. 7, the mounting face 270 may be positioned adjacent or proximate to the connector protruding member 268. However, in other instances, the mounting face 270 may be positioned in any suitable location.

In some instances, the connector protruding member 268 may be substantially similar to the lockout protruding member 218 described above with reference to FIG. 5. For example, the connector protruding member 268 may include a connector planar portion 272 (e.g., coupled to the mounting face 270 and extending upwardly therefrom) and a connector lipped portion 274 coupled to the connector planar portion 272 and positioned at or proximate to the connector second end 264. In other instances, the connector protruding member 268 may be provided in any suitable form.

In some instances, the mounting face 270 may be provided in the form of a substantially annular housing 276 defined by a housing external diameter 278 and a housing internal diameter 280. The housing 276 may be configured to receive and retain a seal member 282. For example, the seal member 282 may be provided in the form of a substantially annular insert formed from rubber or another suitable material (e.g., a compressible material configured to facilitate an airtight connection) and defined by a seal external diameter 284 and a seal internal diameter 286. In some instances, the seal external diameter 284 may be selected to be substantially the same as (or slightly larger than) the housing internal diameter 280 such that the seal member 282 may be securely received within the housing 276. Additionally (or alternatively), the seal member 282 may be positioned within the housing 276 and coupled thereto (e.g., using an adhesive, bonding agent, or other means).

The seal internal diameter 286 may define a seal opening 288 configured to receive the mounting post 222 of the lockout 202. Thus, the seal internal diameter 286 may be substantially similar to an external diameter of the mounting post 222 (e.g., a diameter of the mounting post 222 measured at the cylindrical portion 250). In some instances, the mounting post 222 may be slightly oversized with respect to the seal opening 288. For example, the cylindrical portion 250 of the mounting post 222 may be slightly larger (e.g., may be imparted with a slightly larger diameter) than the seal internal diameter 286 such that the mounting post 222 engages the seal member 282 and applies an outward pressure thereto when the mounting post 222 is positioned within the seal opening 288. Engagement between the seal member 282 and the mounting post 222 may facilitate a fit (e.g., a friction fit) between the seal member 282 and the lockout 202 such that the lockout 202 is restricted from unintentionally shifting or moving with respect to the gladhand connector 206 when the gladhand lockout device 200 is in use.

The gladhand connector 206 may include a barrier 290 either formed integrally with the connector body 260 or coupled thereto. For example, in some instances, the barrier 290 may be coupled to the connector base 266 via one or more fasteners 292. In some instances, the fasteners 292 may be provided in the form of threaded fasteners configured to extend through an opening in the barrier 290 and be received via threaded engagement within an associated opening in the connector base 266. The barrier 290 may include a connector sidewall 294 and a connector end wall 296 coupled to the connector sidewall 294 or formed integrally therewith. For example, the connector end wall 296 may be coupled to the connector sidewall 294 at a connector sidewall proximal end 298 and may be substantially perpendicular with respect to the connector sidewall 294.

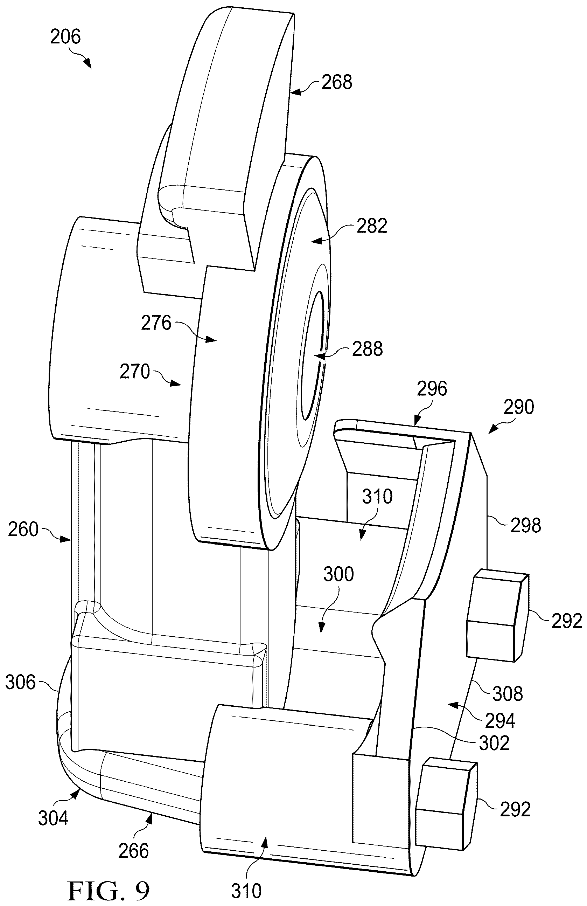

Turning to FIG. 9, the connector base 266 may be provided in the form of a substantially planar platform 304 defined by a base first end 306 and a base second end 308 opposing the base first end 306. In some instances, the connector base 266 may further include two fastener receiving members 310 either formed integrally with the connector base 266 or coupled thereto. For example, the two fastener receiving members 310 may be positioned on opposing sides of the base second end 308 (e.g., adjacent or proximate to the connector sidewall proximal end 298 and the connector sidewall distal end 302). The fastener receiving members 310 may be provided in the form of substantially cylindrical components having a bore (not shown) that opens toward the base second end 308. The bore of the fastener receiving members 310 may be configured to facilitate coupling of the barrier 290 to the connector base 266 by receiving an end of the fasteners 292. In some instances, the bore of the fastener receiving members 310 may have internal threading configured to complement external threading of the fasteners 292. In other instances, the fastener receiving members 310 may be omitted and the barrier 290 may be coupled to the connector base 266 in any suitable manner (e.g., formed integrally therewith, welded thereto, glued thereto, etc.).

Thus, as best shown in FIG. 9, in some instances, the connector cavity 300 may be at least partially enclosed by the barrier 290 (including the connector sidewall 294 and the connector end wall 296), the fastener receiving members 310, and/or a portion of the platform 304 extending between the fastener receiving members 310. In instances where the fastener receiving members 310 are omitted, the connector cavity 300 may be at least partially defined by the connector sidewall 294, the connector end wall 296, and the platform 304.

The barrier 290 may at least partially define a connector cavity 300 positioned adjacent or proximate to the connector first end 262. For example, the connector cavity 300 may be enclosed on at least three sides by the connector base 266, connector sidewall 294, and connector end wall 296. The connector cavity 300 may be open at or proximate to a connector sidewall distal end 302 (e.g., opposing the connector sidewall proximal end 298). In some instances, the connector cavity 300 may be configured to receive the lockout protruding member 218 when the gladhand lockout device 200 is in use.

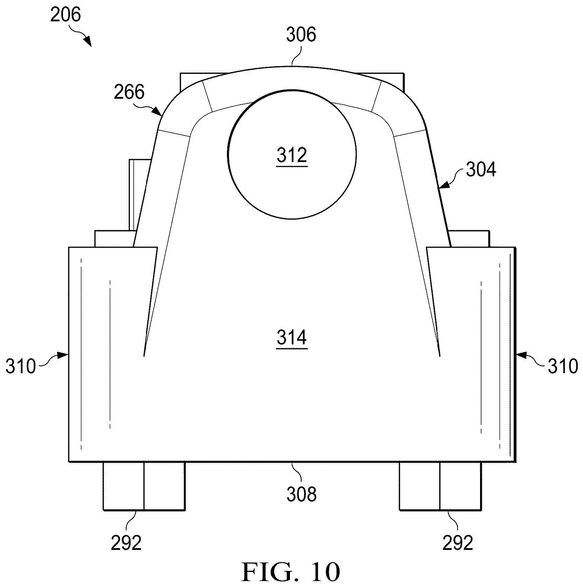

Turning to FIG. 10, the gladhand connector 206 may include a mounting opening 312 positioned on a base surface 314 of the platform 304. The mounting opening 312 may facilitate mounting the gladhand connector 206 on the vehicle 100 (e.g., on the tractor 102 and/or on the trailer 104). For example, referring momentarily back to FIG. 2, the base surface 314 may be arranged adjacent to the mounting plate 126 and a fastener (e.g., fastener 292) may extend through a dedicated opening in the mounting plate 126 before being received within the mounting opening 312 (e.g., via threaded engagement between an internal surface of the mounting opening 312 and an external surface of the fastener). In the example of FIG. 10, the mounting opening 312 is positioned proximate to the base first end 306. However, in other instances, the mounting opening 312 may be positioned in any suitable location. Furthermore, in some instances, the mounting opening 312 may be omitted, and the gladhand connector 206 may be coupled to the vehicle 100 in any suitable manner.

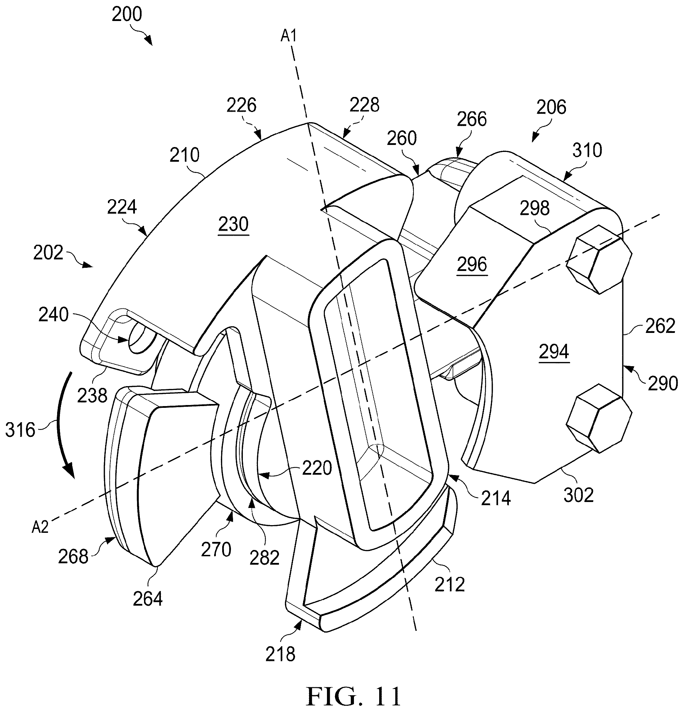

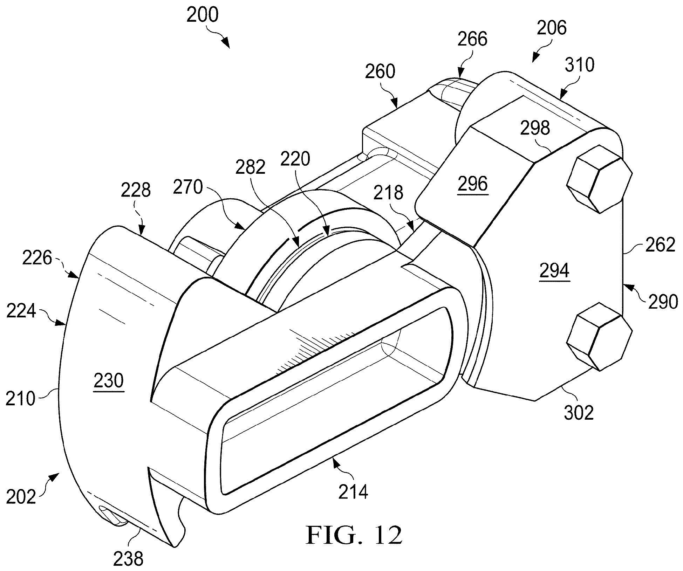

Turning now to FIGS. 11 and 12, a method of using or installing the gladhand lockout device 200 may include first arranging the lockout 202 at an angle with respect to the gladhand connector 206. For example, the lockout 202 may define a first longitudinal axis A1 extending linearly between the lockout first and second ends 210, 212, and the gladhand connector 206 may define a second longitudinal axis A2 extending linearly between the connector first and second ends 262, 264. In some instances, the lockout 202 may be oriented at a right angle with respect to the gladhand connector 206 such that the first and second longitudinal axes A1, A2 are substantially perpendicular. However, in other instances, the lockout 202 may be oriented at any suitable angle with respect to the gladhand connector 206, provided that the mounting post 222 is capable of being fully received by the mounting face 270 (e.g., provided that the mounting post 222 can be fully inserted into the seal opening 288).

Subsequently, the lockout 202 may be positioned adjacent to the gladhand connector 206 such that the mounting post 222 of the lockout 202 is received by the mounting face 270 of the gladhand connector 206 (e.g., such that the mounting post 222 is received within the seal opening 288), as shown in FIG. 11. In some instances, a user may press the lockout 202 against the gladhand connector 206 such that the support plate 220 of the lockout 202 engages (e.g., compresses) the seal member 282. For example, pressing the lockout 202 against the gladhand connector 206 may ensure that the mounting post 222 is fully (or substantially) received within or engaged by the seal opening 288, thereby ensuring an effective seal and/or airtight connection between the lockout 202 and the gladhand connector 206.

At this stage, the lockout 202 may be oriented relative to the gladhand connector 206 such that the lockout compartment 224 of the lockout 202 is arranged to receive the connector protruding member 268 and the barrier 290 of the gladhand connector 206 is arranged to receive the lockout protruding member 218 when the lockout 202 rotates in the direction of arrow 316. For example, the lockout 202 may be oriented such that the connector protruding member 268 is positioned adjacent or proximate to the lockout sidewall distal end 238 and the lockout protruding member 218 is positioned adjacent or proximate to the connector sidewall distal end 302.

A user may move the lockout 202 from an initial position to a locking position by rotating the lockout 202 relative to the gladhand connector 206 in the direction of the arrow 316. For example, in the initial position, the first longitudinal axis A1 may be oriented at an angle with respect to the second longitudinal axis A2 (see FIG. 11). On the other hand, as shown in FIG. 12, the first and second longitudinal axes A1, A2 may be substantially parallel with respect to one another when the lockout 202 is in the locking position. For example, the user may rotate the lockout 202 by gripping or engaging the grip portion 214. In the locking position, the lockout first end 210 may be adjacent or proximate to the connector second end 264 and the lockout second end 212 may be adjacent or proximate to the connector first end 262.

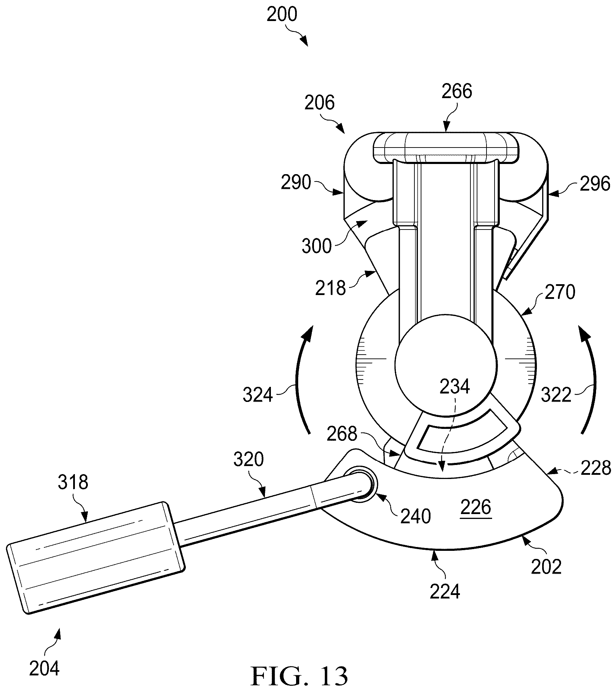

Turning to FIG. 13, when the lockout 202 is in the locking position, the locking member 204 may be installed to complete installation of the gladhand lockout device 200. The locking member 204 may be configured to maintain the lockout 202 in the locking position by restricting or preventing rotation of the lockout 202 in a first direction, or in the direction of arrow 322. For example, in some instances, the locking member 204 may be provided in the form of a padlock having a lock body 318 and a shackle 320 coupled to the lock body 318. The shackle 320 may extend through the locking hole 240 of the lockout 202 when the locking member 204 is installed. In other instances, the locking member 204 may be provided in any other suitable form, provided that the locking member 204 is configured to restrict or prevent the lockout 202 from unintentionally rotating out of the locking position (e.g., in the direction of the arrow 322).

When the gladhand lockout device 200 is in use, the lockout protruding member 218 may be received by or positioned within the connector cavity 300 defined at least partially by the barrier 290 of the gladhand connector 206, and the connector protruding member 268 may be received by or positioned within the lockout cavity 234 defined at least partially by the lockout compartment 224 of the lockout 202. In this way, the engagement between the lockout 202 and the gladhand connector 206 may maintain the lockout 202 in the locking position by restricting or preventing rotation of the lockout 202 in a second direction, or in the direction of arrow 324. For example, if the lockout 202 begins to rotate in the direction of the arrow 324, the lockout protruding member 218 may impact or engage the connector end wall 296 and the connector protruding member 268 may impact or engage the lockout end wall 228. Engagement between the lockout protruding member 218 and the connector end wall 296 and/or engagement between the connector protruding member 268 and the lockout end wall 228 may terminate rotation of the lockout 202 in the direction of the arrow 324.

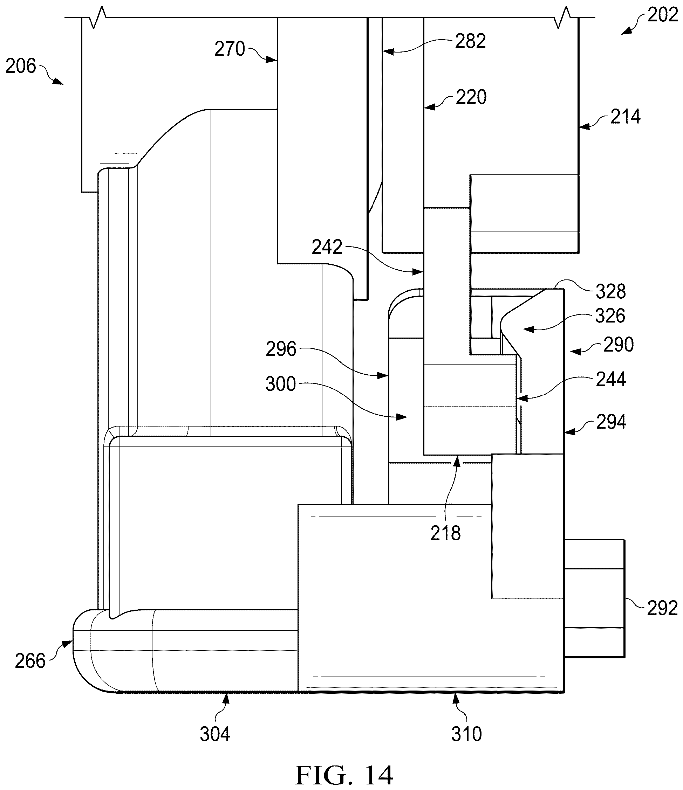

Turning to FIG. 14, in some instances, the barrier 290 may include a connector ridge 326 extending along a free edge 328 of the connector sidewall 294. The connector ridge 326 may be formed integrally with the barrier 290 or may be coupled to the connector sidewall 294 and extend inwardly therefrom (e.g., the connector ridge 326 may extend into the connector cavity 300). Thus, the connector ridge 326 may engage the lockout lipped portion 244 of the lockout protruding member 218, thereby restricting or preventing unintentional movement of the lockout 202 while the gladhand lockout device 200 is in use. For example, engagement between the connector ridge 326 and the lockout lipped portion 244 may restrict or prevent the lockout 202 from moving or shifting away from the connector base 266. However, in other instances, the connector ridge 326 may be omitted.

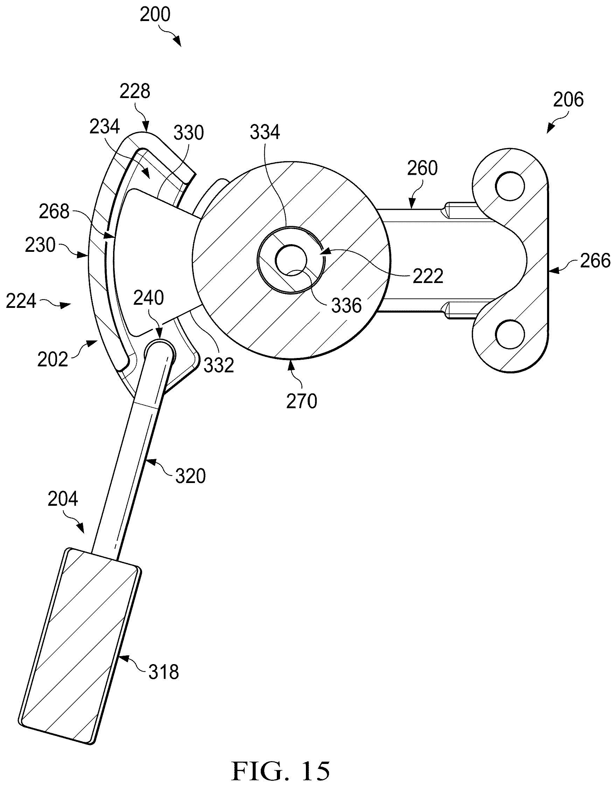

The cross-sectional view of FIG. 15 depicts the connector protruding member 268 positioned within the lockout cavity 234. For example, the connector protruding member 268 may include a first engagement edge 330 and a second engagement edge 332 positioned on opposing ends of the connector protruding member 268. Thus, the first engagement edge 330 may impact or engage the lockout end wall 228 if the lockout 202 begins to rotate in the first direction (e.g., in the direction of the arrow 322 of FIG. 13), and the second engagement edge 332 may impact or engage the shackle 320 of the locking member 204 if the lockout 202 begins to rotate in the second direction (e.g., in the direction of the arrow 324 of FIG. 13).

Additionally, FIG. 15 depicts the mounting post 222 of the lockout 202 received by the mounting face 270 of the gladhand connector 206. For example, the mounting post 222 may extend through the seal opening 288 and into a mounting face opening 334. In some instances, the mounting face opening 334 may be provided in the form of a substantially circular opening extending at least partially through the mounting face 270 and arranged to align with the seal opening 288. Additionally, in some instances, the mounting post 222 may include a hollow core 336 provided in the form of a substantially circular opening extending at least partially through the mounting post 222. For example, the hollow core 336 may reduce a weight of the lockout 202 and/or a cost of manufacturing the lockout 202. In other instances, however, the mounting post 222 may be solid and the hollow core 336 may be omitted.

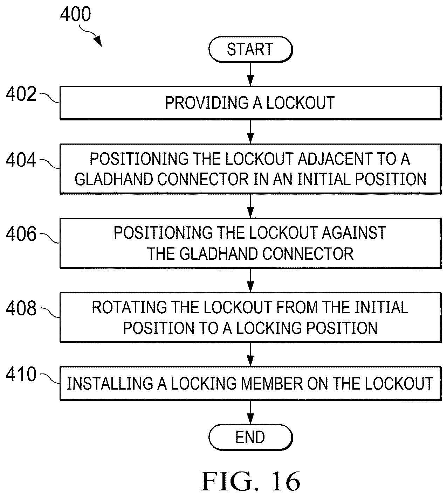

FIG. 16 illustrates a method 400 of securing an air brake system of a vehicle (e.g., vehicle 100) using a gladhand lockout device (e.g., gladhand lockout device 200).

At a step 402, a lockout (e.g., lockout 202) including a lockout protruding member (e.g., lockout protruding member 218), a mounting post (e.g., mounting post 222), a lockout cavity (e.g., lockout cavity 234), and a locking hole (e.g., locking hole 240) is provided.

At a step 404, the lockout is positioned adjacent to a gladhand connector (e.g., gladhand connector 206) in an initial position where the lockout is oriented at an angle with respect to the gladhand connector (e.g., shown in FIG. 11), the gladhand connector including a connector protruding member (e.g., connector protruding member 268), a seal member (e.g., seal member 282), and a connector cavity (e.g., connector cavity 300).

At a step 406, the lockout is positioned against the gladhand connector such that the mounting post is received within an opening (e.g., seal opening 288) of the seal member.

At a step 408, the lockout is rotated from the initial position to a locking position (e.g., shown in FIG. 12) where the lockout protruding member is positioned within the connector cavity and the connector protruding member is positioned within the lockout cavity.

At a step 410, a locking member (e.g., locking member 204) is installed on the lockout via the locking hole, and the method ends.

It will be appreciated by those skilled in the art that while the above disclosure has been described above in connection with particular embodiments and examples, the above disclosure is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference as if each such patent or publication were individually incorporated by reference herein. Various features and advantages of the above disclosure are set forth in the following claims.

## Claims

1. A lockout for use with a gladhand connector, comprising:
a body defined by a lockout first end and a lockout second end, the body comprising:
a grip portion,
a lockout compartment positioned proximate to the lockout first end,
a lockout protruding member positioned proximate to the lockout second end, and
an opening configured to receive at least a portion of a locking member; and
a mounting post positioned on the body and located between the lockout compartment and the lockout protruding member.

2. The lockout of claim 1, wherein the body of the lockout has substantially the same shape as a body of the gladhand connector.

3. The lockout of claim 1 or 2, wherein the lockout compartment includes a lockout sidewall and a lockout end wall, and wherein the lockout sidewall and the lockout end wall at least partially define a lockout cavity configured to receive a portion of the gladhand connector.

4. The lockout of claim 3, wherein the lockout end wall is configured to engage a portion of the gladhand connector to inhibit rotation of the lockout with respect to the gladhand connector when the lockout is in use.

5. The lockout of claim 3 or 4, wherein the opening is positioned on the lockout sidewall and extends entirely therethrough.

6. The lockout of any one of claims 1 to 5, wherein the mounting post is configured to be received within a seal opening of a seal member positioned on the gladhand connector.

7. The lockout of claim 6, wherein the mounting post includes a cylindrical portion coupled to the body and a frustoconical portion coupled to the cylindrical portion, wherein the frustoconical portion is imparted with a tapered geometry, and wherein the cylindrical portion is imparted with a diameter that is slightly oversized with respect to the seal opening such that the mounting post applies an outward force that compresses the seal member when the mounting post is received within the seal opening.

8. The lockout of claim 6 or 7, wherein the lockout is configured to be installed on the gladhand connector by:
positioning the lockout adjacent to the gladhand connector in an initial position where the lockout is oriented at an angle with respect to the gladhand connector and the mounting post is received within the seal opening;
rotating the lockout into a locking position where the lockout is substantially parallel with respect to the gladhand connector; and
coupling the locking member to the lockout.

9. The lockout of any one of claims 1 to 8, wherein the lockout protruding member includes a lockout planar portion and a lockout lipped portion.

10. The lockout of any one of claims 1 to 9, wherein the lockout protruding member is configured to be received within a connector cavity of the gladhand connector, and wherein the connector cavity is at least partially defined by a connector end wall configured to engage the lockout protruding member to inhibit rotation of the lockout with respect to the gladhand connector when the lockout is in use.

11. The lockout of any one of claims 1 to 10, wherein the locking member is a padlock.

12. A method of securing an airbrake system of a vehicle, comprising:
providing a lockout including a lockout protruding member, a mounting post, a lockout cavity, and a locking hole;
positioning the lockout adjacent to a gladhand connector in an initial position where the lockout is oriented at an angle with respect to the gladhand connector, the gladhand connector including a connector protruding member, a seal member, and a connector cavity;
positioning the lockout against the gladhand connector such that the mounting post is received within an opening of the seal member; and
rotating the lockout from the initial position to a locking position where the lockout protruding member is positioned within the connector cavity and the connector protruding member is positioned within the lockout cavity.

13. The method of claim 12, further comprising the step of installing a locking member on the lockout via the locking hole.

14. The method of claim 12 or 13, wherein the lockout is maintained in the locking position by at least one of:
engagement between the lockout protruding member and a barrier that at least partially defines the connector cavity;
engagement between the connector protruding member and a lockout end wall that at least partially defines the lockout cavity; and
engagement between the connector protruding member and at least a portion of the locking member.
